# EUROPEAN PATENT APPLICATION

(11) **EP 4 694 326 A1**
(43) Date of publication of application: **11.02.2026**
(21) Application number: 24192807.6
(22) Date of filing: 05.08.2024
(51) Int. Cl.: H04W 36/00

(54) **FLEXIBLE MEASUREMENT REPORTING FOR EVENT-TRIGGERED L1/L2-TRIGGERED MOBILITY (LTM) MEASUREMENTS**

(71) Applicant: InterDigital Patent Holdings, Inc., Wilmington, DE 19809 (US)
(72) Inventor: FREDA, Martino, LAVAL, H7E5M4 (CA); MARTIN, Brian, FARNHAM, GU9 9AN (GB); MARINIER, Paul, BROSSARD, J4X 2J7 (CA); TEYEB, Oumer, MONTREAL, H3C 0x6 (CA); WATTS, Dylan, MONTREAL, H4A 3L7 (CA); KUBOTA, Keiichi, SETAGAYA-KU, 158-0094 (JP); PELLETIER, Benoit, ROXBORO, H8Y 1L3 (CA)
(74) Representative: Interdigital

(57) **Abstract**

Procedures, methods, architectures, apparatuses, systems, devices, and computer program products using wireless transmit/receive unit (WTRU) configured for receiving first configuration information indicating at least one target cell; receiving second configuration information indicating at least one measurement event, a first reporting configuration, a second reporting configuration, wherein the first and second configurations are associated with the at least one measurement event; performing at least one measurement from the at least one target cell; determining, based on the at least one measurement, a measurement event; determining, based on a size of an available uplink grant, whether to use the first or second reporting configuration to report the measurement event; and transmitting, using the determined reporting configuration, a measurement report comprising the measurement event and the at least one measurement.

## Description

### BACKGROUND

The present disclosure is generally directed to the fields of communications, software and encoding, including, for example, to methods, architectures, apparatuses, systems directed to layer1 (L1) / layer 2 (L2) based mobility, for example to methods, apparatus and systems to report event triggered L1/L2 measurement reports.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 illustrates an example of a LTM procedure; and
FIG. 3 illustrates an example of a report event triggered measurement reports, implemented by a WTRU.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

Provided below are acronyms/abbreviations for terms and phrases commonly used in this application:
- ACK: Acknowledgement
- BLER: Block Error Rate
- BWP: Bandwidth Part
- CAP: Channel Access Priority
- CAPC: Channel access priority class
- CCA: Clear Channel Assessment
- CCE: Control Channel Element
- CE: Control Element
- CG: Configured grant or cell group
- CP: Cyclic Prefix
- CP-OFDM: Conventional OFDM (relying on cyclic prefix)
- CQI: Channel Quality Indicator
- CRC: Cyclic Redundancy Check
- CSI: Channel State Information
- CW: Contention Window
- CWS: Contention Window Size
- CO: Channel Occupancy
- DAI: Downlink Assignment Index
- DCI: Downlink Control Information
- DFI: Downlink feedback information
- DG: Dynamic grant
- DL: Downlink
- DM-RS: Demodulation Reference Signal
- DRB: Data Radio Bearer
- eLAA: enhanced Licensed Assisted Access
- FeLAA: Further enhanced Licensed Assisted Access
- HARQ: Hybrid Automatic Repeat Request
- LAA: License Assisted Access
- LBT: Listen-Before-Talk
- LTE: Long Term Evolution e.g., from 3GPP LTE R8 and up
- NACK: Negative ACK
- MCS: Modulation and Coding Scheme
- MIMO: Multiple Input Multiple Output
- NR: New Radio
- OFDM: Orthogonal Frequency-Division Multiplexing
- PHY: Physical Layer
- PID: Process ID
- PO: Paging Occasion
- PRACH: Physical Random Access Channel
- PSS: Primary Synchronization Signal
- RA: Random Access (or procedure)
- RACH: Random Access Channel
- RAR: Random Access Response
- RCU: Radio access network Central Unit
- RF: Radio Front end
- RLF: Radio Link Failure
- RLM: Radio Link Monitoring
- RNTI: Radio Network Identifier
- RO: RACH occasion
- RRC: Radio Resource Control
- RRM: Radio Resource Management
- RS: Reference Signal
- RSRP: Reference Signal Received Power
- RSSI: Received Signal Strength Indicator
- SDU: Service Data Unit
- SRS: Sounding Reference Signal
- SS: Synchronization Signal
- SSS: Secondary Synchronization Signal
- SWG: Switching Gap (in a self-contained subframe)
- SPS: Semi-persistent scheduling
- SUL: Supplemental Uplink
- TB: Transport Block
- TBS: Transport Block Size
- TRP: Transmission / Reception Point
- TSC: Time-sensitive communications
- TSN: Time-sensitive networking
- UL: Uplink
- URLLC: Ultra-Reliable and Low Latency Communications
- WBWP: Wide Bandwidth Part
- WLAN: Wireless Local Area Networks and related technologies (IEEE 802.xx domain)

Hereinafter, 'a' and 'an' and similar phrases are to be interpreted as 'one or more' and 'at least one'. Similarly, any term which ends with the suffix '(s)' is to be interpreted as 'one or more' and 'at least one'. The term 'may' is to be interpreted as 'may, for example'.

A symbol '/' (e.g., forward slash) may be used herein to represent 'and/or', where for example, 'A/B' may imply 'A and/or B'.

### Example Communications System

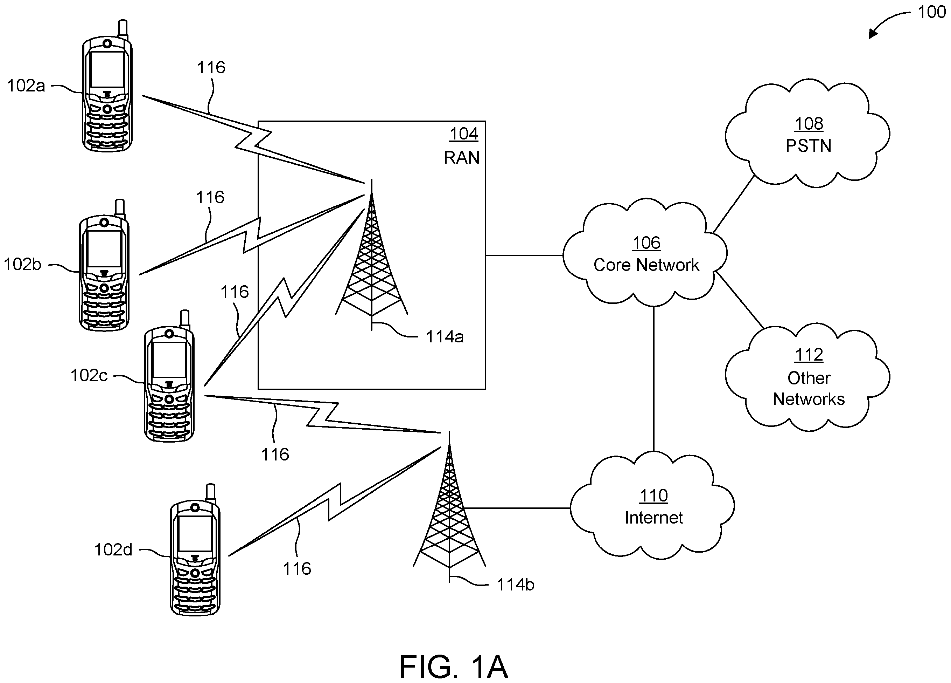

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

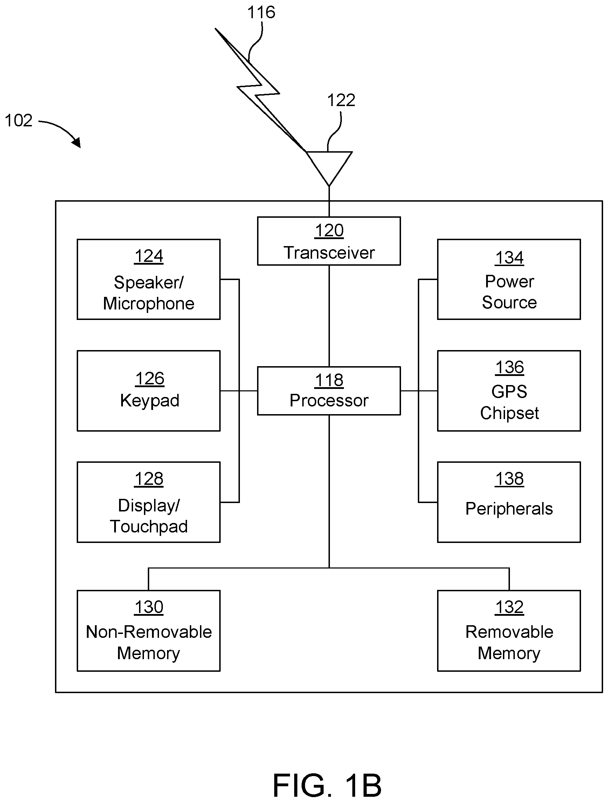

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

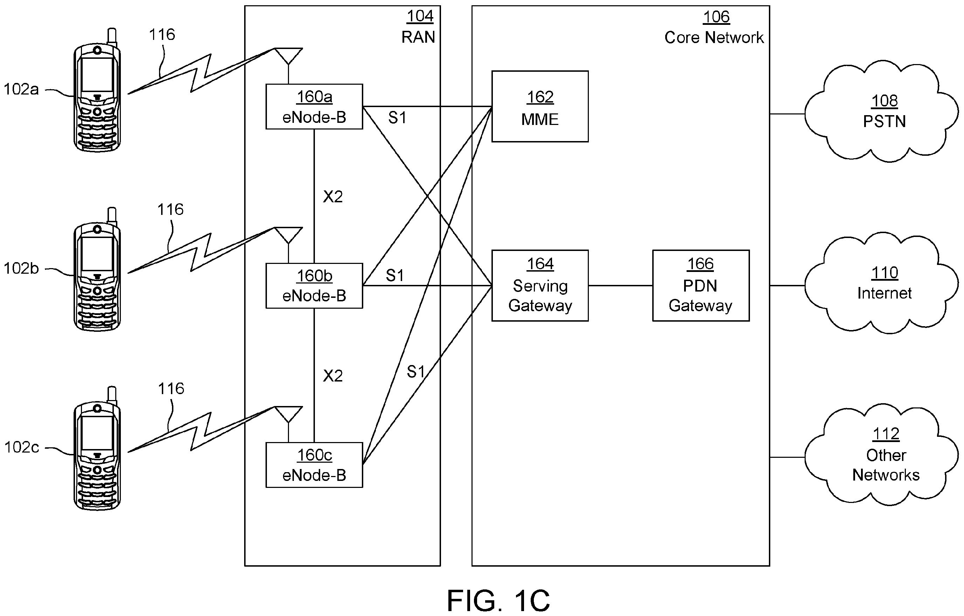

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-fine communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

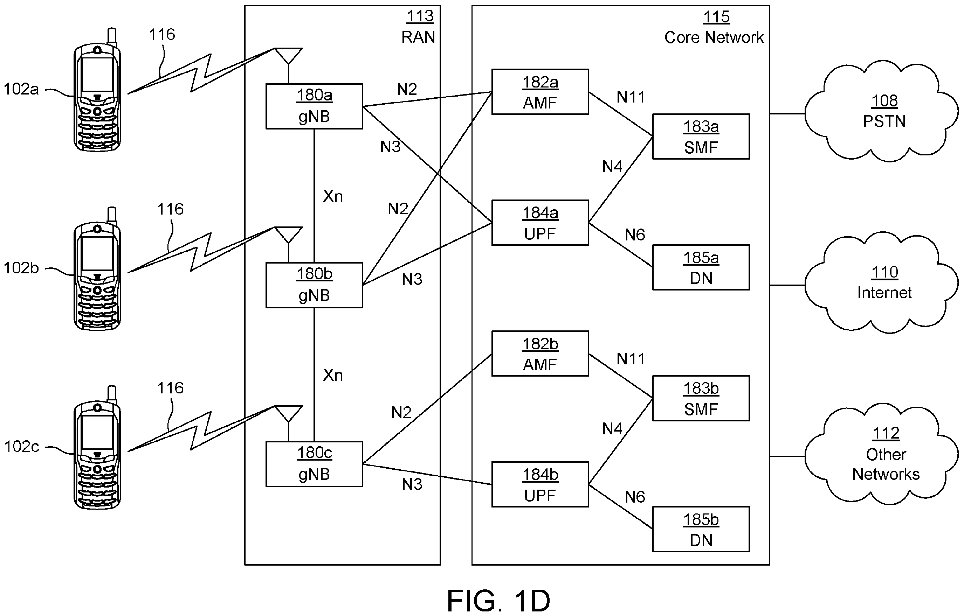

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Mobility enhancement in Re119

3GPP has agreed to a work item on mobility enhancement in Re119 [1]. The justification for the work is as follows:
*Layer 2 mobility (LTM) was introduced in Rel-18 and can offer improvements in handover latency and interruption time compared to Layer 3 based mobility. However, LTM as introduced in Rel-18 also has a number of limitations compared to Layer 3 mobility. This Rel-19 work item aims to remove a number of these limitations.*
*LTM operation is only supported for mobility between cells of the same gNB (same CU). Depending on the deployment of the network this may significantly limit the opportunities to use LTM. By enabling LTM operation between cells of different gNBs (i.e. inter-CU) then the network will be able gain the benefits of LTM for a far greater number of handovers.*
*Layer 3 mobility uses layer 3 measurement reporting which supports UE evaluated events for triggering of measurement reports and reduces signalling overhead compared to periodic measurement reporting. Such event triggering is not supported by the L1 measurements that are used for LTM mobility.*
*L1 measurements for LTM procedures are limited to SSB measurements. Expanding L1 measurements to include CSI-RS can address this limitation and can be expected to enable greater throughput on the target cell immediately after cell switch.*
*Layer 3 mobility has evolved over several releases. Conditional handover (CHO) and other conditional mobility procedures (CPAC, SCPAC) were developed to achieve high robustness by enabling the procedure to be executed without necessitating a signalling exchange with source cell beforehand. LTM as introduced in Rel-18 offers short interruption time but not with the same level of robustness as the conditional L3 mobility procedures. In Rel-19, enhancements should be specified so that the system can benefit from both the high robustness and short interruption.*

RAN2 scope of this work is defined as follows:
- *Specify support for inter-CU Layer 2 Mobility (LTM) [RAN2, PAN3]*
   ∘ *Prioritize the case when CU is acting as MN when DC is not configured*
   ∘ *As secondary priority, support the case when NR-DC is configured and CU is acting as SN and MCG is unchanged*
   ∘ *As secondary priority, support the case when NR-DC is configured, CU is acting as MN and SCG is unchanged or SCG is released*
      ▪ *Note: The case that LTM is configured in both MCG and SCG is excluded*
   ∘ *Specify support for subsequent LTM mobility procedures aiming to avoid RRC configuration between cell switches as per Rel-18 LTM*
      ▪ *Coordination with SA3 needed with respect to security key handling*
   ∘ *Note: Rel. 18 intra-CU LTM procedure is considered as baseline for adding inter-CU support*
- *Measurements related enhancements for purpose of supporting LTM: [RAN2, RAN1]*
   ∘ *Measurement related enhancements are applicable to Intra-CU MCG*/*SCG LTM and Inter-CU MCG*/*SCG LTM*
   ∘ *Specify necessary components to support event triggered L1 measurement reporting [RAN2, RAN1]*
      ▪ *RAN1 and RAN2 to progress independently on the event triggered measurements objectives of their respective MIMO and Mobility enhancement WIs. Review progress at RAN#105 to see if any modification of objectives is required to avoid*/*manage any overlap in the work*
   ∘ *Specify support for CSI-RS measurements for LTM procedures and enable CSI-RS based beam management, and*/*or other necessary physical layer operations on candidate cells before LTM [RAN1]*
- *Specify support of conditional LTM [RAN2, RAN3*, *RAN1]*
   ∘ *Specify UE evaluated conditions for triggering LTM*
   ∘ *Aim to support conditional LTM including subsequent LTM*
   ∘ *Prioritise intra-CU LTM*
   ∘ *Checkpoint to review objective at RAN#105. RAN WG work to not start before this checkpoint*

Legacy L3 measurement reporting relies on either periodic or event triggered measurement reporting. Periodic measurement reporting can result in significant signaling overhead, especially when the WTRU (e.g., UE) is not moving or the cell qualities are relatively static. With event triggered measurements, a WTRU (e.g., UE) can be configured with a variety of events (Ax events, Bx events, etc.) related to the measured quantities of serving and neighbor cells and triggers measurement reports in RRC only when the events are satisfied.

LTM was developed in Re118 to reduce handover latency by avoiding the interaction with slower RRC signaling. L1 measurements are sent using L1 signaling, and the handover decision is sent by the network with a MAC CE. LTM in release 18 relies only on periodic, semi-persistent or aperiodic measurement (CSI) reporting to trigger the LTM decision. This suffers from the same signaling overhead problem as L3 measurement reporting. Furthermore, because periodic L1 measurement reports use L1 signaling without HARQ mechanism, the reliability of reporting is limited. For this reason, event triggered measurement reporting for L1/L2 measurements is being considered, and MAC layer or PHY layer reporting are both potential solutions.

Measurement events for event triggered L1/L2 measurements will likely use Ax, Bx like events which use L1 measurements rather than L3 measurements.

The following issues may arise: L1 measurement reports are expected to have the same (or possibly more) signaling compared to L3 measurements. Sending these measurements in low overhead MAC or PHY signaling (e.g., MAC CE, PUCCH, etc.) may be challenging since MAC CE is expected to be small compared to data.

The following issues may also arise: it is expected (due to reduced filtering, and the need to trigger HO decisions more quickly) that L1/L2 measurements may change more frequently than L3 measurements. Prioritizing measurements over data in all cases may lead to reduced data throughput when HO decisions are not needed. Furthermore, event triggered L1/L2 measurement reports may not always be used to trigger handover decisions. Specifically, they may be used to initiate early sync. Therefore, always assigning the highest priority to measurement reports may not be appropriate.

Reporting of measurements at L1/L2 instead of RRC allows the WTRU (e.g., UE) to use more flexible prioritization mechanisms that are available in MAC and PHY layers (e.g., those used in URLLC) for sending measurements reports to ensure low latency HO without the signaling overhead of legacy event triggered or periodic measurement reporting.

One or more examples described herein may be used separately or in combination to prioritize and report event triggered L1/L2 measurements results to avoid latency in LTM decision by the network.

Embodiments herein are applicable at least to measurement events associated with LTM. Specifically, a WTRU (e.g., UE) may be configured with an event associated with L1/L2 measurements, whereby such events may be similar/same as L3 events (e.g., Ax, Bx, etc.) defined in existing standard. Specifically, a WTRU (e.g., UE) may receive such event configuration using RRC signaling. According to embodiments, the WTRU (e.g., UE) may receive the event configuration in a MAC CE. A WTRU (e.g., UE) may further be configured with a measurement reporting configuration. A WTRU (e.g., UE) may determine a measurement reporting mechanism, or a property of its measurement reporting based on conditions described herein.

Although embodiments herein are defined in terms of LTM measurement events and reporting, the same embodiments may be applicable to any other cell/beam quality reporting performed at any layer.

### Measurement Reporting Mechanisms

Measurement reporting mechanisms may comprise reporting the measurement by using a different configuration for an aspect. Specifically, a WTRU (e.g., UE) may be configured with different configurations for an aspect and may determine whether to select a first configuration or a second configuration when performing the measurement report. In embodiments herein, a measurement reporting mechanism may comprise of any of the following aspects: (1) a WTRU (e.g., UE) assigning a priority to a measurement report; (2) a WTRU (e.g., UE) determining size/amount of measurements to transmit; (3) a WTRU (e.g., UE) determining the channel/resource to use to report; and (4) a WTRU (e.g., UE) determining duration of reporting.

A WTRU (e.g., UE) may assign a priority to a measurement report. Such priority may define any of the following WTRU (e.g., UE) behavior: (1) in what order to include the measurement report into a grant (e.g., LCP); (2) determination of a CSI (or L1 reporting) priority; (3) physical layer priority of the transmission carrying the measurement report; and (4) use of a high priority (or specifically identified) grant.

In what order to include the measurement report into a grant (e.g., LCP): specifically, a WTRU (e.g., UE) may determine an LCP priority associated with a measurement report. For example, such may involve determining a LCH priority to be used when performing LCP. For example, such may involve determining the priority order of the MAC CE which contains the measurement report or a portion of the measurement report.

For example, in the determination of a CSI (or L1 reporting) priority, in case a measurement report is transmitted as a CSI report, a WTRU (e.g., UE) may determine a priority for the purpose of CSI processing. If a WTRU (e.g., UE) has insufficient CSI processing units for calculation of CSI reports, the WTRU (e.g., UE) may (e.g., only) update requested CSI reports that have highest priority.

For example, in the determination of a CSI (or L1 reporting) priority, in case a measurement report is transmitted as a CSI report, a WTRU (e.g., UE) may determine a priority for the purpose of determining whether to include the report in a transmission (e.g. PUSCH or PUCCH) or to omit the report.

Physical layer priority of the transmission carrying the measurement report: for example, in case a measurement report is transmitted as a CSI report using a PUCCH or PUSCH transmission, the PUCCH or PUSCH transmission may be assigned a (first) priority index. If there is overlap between this (first) transmission and a (second) PUCCH or PUSCH transmission with second priority index, the WTRU (e.g., UE) may drop the transmission with lowest priority index or multiplex the information from first and second transmissions into a single transmission while assigning resources based on first and second priority indices.

In the use of a high priority (or specifically identified) grant, a WTRU (e.g., UE) may determine at least one priority index for the measurement report, such that the WTRU (e.g., UE) is allowed to include the measurement report in a grant with one of the at least one priority index.

Specifically, a WTRU (e.g., UE) may be allowed to use a high priority grant to transmit a measurement report (e.g., a grant with high priority indication). Specifically, the WTRU (e.g., UE) may receive an indication in DCI which assigns a high priority grant and may use the grant for transmitting a measurement report. Specifically, the WTRU (e.g., UE) may be configured with a high priority configured grant (e.g., type 1 or type 2) and may be allowed to use the grant for transmitting a measurement report.

A WTRU (e.g., UE) may determine the size/amount of measurement report to transmit. Such may include determining any of the following: (1) the number of cells/beams to include in the measurement report; (2) the specific cells/beams to include in the measurement report; (3) the (absolute) size of the measurement report; (4) the type of measurement to report; and (5) the format of the report.

A WTRU (e.g., UE) may determine the number of cells/beams to be included in a measurement report. For example, a WTRU (e.g., UE) may include at least/most x cells or beams in a measurement report, where x may be a configured threshold.

A WTRU (e.g., UE) may determine the cells/beams to include in the measurement report based on their absolute or relative measurements. For example, a WTRU (e.g., UE) may report the cells or beams which have a measurement (e.g., RSRP, RSRQ, etc.) above a threshold. For example, a WTRU (e.g., UE) may report a beam if the next best beam is below that beam in measurement by at least a threshold.

A WTRU (e.g., UE) may determine the cells/beams to include in the measurement report based on a configured characteristics of the cells/beams in particular. For example, the WTRU (e.g., UE) may include beams configured with CSI measurements. For example, the WTRU (e.g., UE) may include cells/beams for which the WTRU (e.g., UE) has a provided timing offset. For example, the WTRU (e.g., UE) may include cells which are configured as candidates for a specific WTRU (e.g., UE) operation (e.g., CHO candidate, LTM candidates, etc.).

For determining the (absolute) size of the measurement report, for example, a WTRU (e.g., UE) may be configured with a maximum size (e.g., in number of bits) of the measurement report. For example, a WTRU (e.g., UE) may be configured with a maximum size associated with beam reports for a specific cell. For example, a WTRU (e.g., UE) may determine the prioritized bit rate (PBR) to be used for a measurement report.

A WTRU (e.g., UE) may determine to report the measurement as a MAC CE, as a L3 measurement, as a PHY layer measurement, etc. For example, the measurement may be filtered or may be unfiltered. For example, the measurement may be filtered with a different set of filtering coefficients.

A WTRU (e.g., UE) may report the measurement using one specific format (e.g., a first MAC CE format) versus a second specific format (e.g., a second MAC CE format). For example, a WTRU (e.g., UE) may report the measurement using different quantization for the value of the measurement (e.g., different number of bits to represent the value). For example, a WTRU (e.g., UE) may report the measurement using (potentially different) mapping tables of reporting value to corresponding table entry.

A WTRU (e.g., UE) may determine the physical, logical, transport channel and/or resource used to report a measurement report. Such may include determining any of the following: (1) transmitting the measurement report on SR; (2) determining whether the measurement event trigger should trigger an SR report; (3) transmitting the measurement report on PUCCH; and (4) Transmitting the measurement report on PUSCH.

For example, a WTRU (e.g., UE) may transmit the measurement report on a dedicated SR for measurement reporting. For example, a WTRU (e.g., UE) may be configured with a set of allowable SRs to use to transmit the measurement report. For example, a WTRU (e.g., UE) may be allowed to use any configured SR to transmit measurement report.

For example, a WTRU (e.g., UE) may always trigger SR when the measurement event is triggered, regardless of whether the WTRU (e.g., UE) has an available grant. For example, a WTRU (e.g., UE) may trigger SR (e.g., only) when a grant (possibly of a specific type, possibly of a specific size, etc.) is not available.

The WTRU (e.g., UE) may include the measurement report in a PUCCH resource. For example, the measurement report may be encoded and multiplexed using methods applicable to channel state information (CSI) or HARQ-ACK.

The WTRU (e.g., UE) may include the measurement report in a PUSCH. For example, the measurement report may be encoded and multiplexed using methods applicable to uplink control information (UCI) such as CSI or HARQ-ACK.

A WTRU (e.g., UE) may determine the duration of the reporting. Such may include performing any of the following: (1) determining the number of reports; and (2) determining the period of time for reporting.

For example, a WTRU (e.g., UE) may be configured with a number of measurement reports to transmit following the measurement event trigger. For example, the WTRU (e.g., UE) may be configured with different number of reports following the event trigger. For example, the WTRU (e.g., UE) may be configured with different conditions for stopping the measurement reporting.

For example, a WTRU (e.g., UE) may be configured with a time period (e.g., a timer) following the event trigger during which it will report measurements. Specifically, the WTRU (e.g., UE) may start a timer at event trigger, and may report a measurement (e.g., periodically) for the duration of that timer.

### Determination of the Measurement Reporting Mechanism

A WTRU (e.g., UE) may determine the specific mechanism to use for measurement reporting and/or a priority aspect based on conditions determined at the WTRU (e.g., UE). The WTRU (e.g., UE) may be configured with such conditions, for example, as part of the measurement event themselves, or an alternate configuration. According to embodiments, such conditions may correspond to specified conditions.

According to embodiments, a WTRU (e.g., UE) may be configured with conditions that determine the measurement reporting mechanisms which relate to availability of resources. These may include any or a combination of the following: (1) availability of a grant; (2) availability of a PHY channel configured; (3) timing associated with the next resource; and (4) amount of space withing a grant.

For example, the WTRU (e.g., UE) may determine a measurement mechanism based on whether a grant is available at the WTRU (e.g., UE).

For example, the WTRU (e.g., UE) may determine a measurement mechanism based on whether a PHY channel is configured or not.

For example, the WTRU (e.g., UE) may determine a measurement mechanism based on whether the next resource occurs within a configured time period from the time of the event trigger. For example, the WTRU (e.g., UE) may determine a measurement mechanism based on the periodicity of the resources applicable for reporting.

For example, the WTRU (e.g., UE) may determine a measurement mechanism based on the absolute size of a grant (e.g., above or below a configured threshold). For example, the WTRU (e.g., UE) may determine a measurement mechanism based on the remaining size within a grant. For example, the mechanism may be determined based on whether the remaining size of a grant when including the measurement report within the grant is above/below a threshold. For example, the WTRU (e.g., UE) may determine a measurement mechanism based on whether a measurement report can be included (can fit) in the grant, if included according to a specific order of inclusion (e.g., based on LCP)

According to embodiments, a WTRU (e.g., UE) may be configured with measurement reporting mechanism and/or a priority aspect which may be based (e.g., depend) on the measurement cell/beam measurements. This may include any or a combination of the following: (1) relation to a specific measurement event; (2) relation to the serving cell/beam measurement; (3) relation to a rate of change of a measurement; (4) based on the difference between measurements; (5) based on a function or combination of measurements; (6) based on a function of time associated with the measurement or measurement events; (7) based on combinations of specific events being triggered; and (8) based on the configuration of other measurement events, possibly of a specific type.

For example, a WTRU (e.g., UE) may be configured to use a first reporting mechanism for a first measurement event type and may be configured to use a second reporting mechanism for a second measurement event type. Such may be, for example, event Ax vs event Ay. For example, a WTRU (e.g., UE) may be configured, in the measurement event, with an explicit indication of the reporting mechanism to be used.

For example, the WTRU (e.g., UE) may determine the event reporting mechanism based on the serving cell/beam measurements, possibly at the time of or after the measurement event trigger which initiates the reporting. For example, the reporting mechanisms mat be dependant on whether the serving cell/beam measurements at the time of event trigger is above/below a configured threshold.

For example, the WTRU (e.g., UE) may determine the event reporting mechanism based on the rate of change of a measurement, either of a serving cell/beam, neighbor cell/beam, cell/beam which triggered the event, etc. For example, if the measurement in question has changed by more of a specific amount in a configured time period, or between successive reports, the WTRU (e.g., UE) may use a first reporting mechanism as opposed to a second reporting mechanism.

For example, the WTRU (e.g., UE) may determine the event reporting mechanism based on conditions related to the difference between the best measurement and other measurements. For example, the reporting mechanism may be determined based on whether the difference between the best beam measurement and other beam measurements is above or below a threshold.

For example, the WTRU (e.g., UE) may determine the event reporting mechanism based on conditions related to a function of measurements related to a cell. For example, the measurement mechanism may be determined based on the average beam measurements for a specific cell.

For example, the WTRU (e.g., UE) may determine the event reporting mechanism based on a function of time associated with the measurement or measurement events. For example, such conditions may be related to the amount of time elapsed since a measurement event was triggered. For example, such conditions may be related to the time elapsed between when a measurement of a cell/beam has changed by a certain amount

For example, the WTRU (e.g., UE) may determine the event reporting mechanism based on combinations of specific events being triggered. For example, such conditions may be related to the triggering of multiple specific events at the same time, or whether a first event is triggered while a second event was triggered. For example, the WTRU (e.g., UE) may determine a measurement reporting mechanism or a priority aspect based on a measurement-related condition evaluated when a certain measurement event is triggered. For example, the WTRU (e.g., UE) may determine that a report triggered by a A3 event (neighbor cell offset higher than serving cell) has a high priority level if the serving cell measurement is below a configured threshold, and a lower priority otherwise.

For example, the WTRU (e.g., UE) may determine the event reporting mechanism based on the configuration of other measurement events, possibly of a specific type. For example, such conditions may be related to whether the WTRU (e.g., UE) is configured with different event types at the same time (e.g., an event is triggered while periodic reporting is also configured).

According to embodiments, a WTRU (e.g., UE) may be configured with measurement reporting mechanism which may be based (e.g., depend) on the data available for transmission at the WTRU (e.g., UE). This may include any or a combination of the following: (1) amount of data; (2) priority of the data; (3) QoS requirements (e.g., latency, remaining PDB, etc.); and (4) ability of the WTRU (e.g., UE) to use a grant for the data (e.g., LCP restriction)

For example, the WTRU (e.g., UE) may determine the reporting mechanism based on the amount of buffered data at the WTRU (e.g., UE) (e.g., above or below a threshold)

For example, the WTRU (e.g., UE) may determine the reporting mechanism based on the priority of the data buffered at the WTRU (e.g., UE) (e.g., above or below a threshold)

For example, the WTRU (e.g., UE) may determine the reporting mechanism based on the remaining packet delay budget of a PDU set.

For example, the WTRU (e.g., UE) may determine the reporting mechanism (potentially associated with a specific grant) based on whether there is (any) data available which is allowed to use the grant.

### Example Determination of the Measurement Reporting Mechanism

According to embodiments, a WTRU (e.g., UE) may be configured with a dedicated SR configuration associated with LTM measurement events. Specifically, the WTRU (e.g., UE) may trigger a dedicated SR if an LTM measurement event is triggered and/or the WTRU (e.g., UE) does not have a grant for which it can transmit the corresponding measurement report. Such transmission may be referred to as an indication that a measurement report is available. The dedicated SR may further be limited to LTM measurement event reporting associated with specific events (e.g., only): (1) for example(e.g., only) Ax events may trigger the dedicated SR; (2) (e.g., only) when the event configuration in RRC allows the trigger of the dedicated SR; (3) (e.g., only) events configured with reporting of beam measurements; (4) etc.

For example, if a WTRU (e.g., UE) triggers a measurement event associated with a specific event tied to the dedicated SR, the WTRU (e.g., UE) may trigger the dedicated SR. Otherwise, the WTRU (e.g., UE) may trigger a regular SR, or may include the measurement report in the next available grant.

For example, a WTRU (e.g., UE) may be allowed to trigger an SR (e.g., a dedicated SR) following the trigger of a measurement event based on one or more conditions described herein. For example, an SR may be triggered following the trigger of an LTM event if one or more of the following is satisfied: (1) if the event is associated with transmitting a first MAC CE format rather than a second MAC CE format; (2) if some specific measurement conditions (e.g., serving cell measurements are below a threshold) is also satisfied at the time of the event trigger; (3) if the current grant is not large enough to include the MAC CE associated with the measurement report; (4) etc.

In case such condition(s) are not satisfied, a WTRU (e.g., UE) may trigger a normal SR. Alternatively, in case such condition(s) are not satisfied, a WTRU (e.g., UE) may not trigger any SR.

According to embodiments, the SR prohibit timer may be based (e.g., depend) on the event type or condition associated with triggering the event. For example, a first event may be configured with a first SR prohibit timer, while a second event type may be configured with a second SR prohibit timer. According to embodiments, the WTRU (e.g., UE) may use a first prohibit timer versus a second prohibit timer for the SR, based on whether another condition (e.g., serving cell measurements less than a threshold) is satisfied at the time the SR is triggered.

According to embodiments, a WTRU (e.g., UE) may determine a priority or priority order of the MAC CE for transmission of an event triggered measurement report based on factors herein. Specifically, the WTRU (e.g., UE), when selecting data to transmit in a grant, may determine the order of the measurement report MAC CE compared to other MAC CEs and/or data from logical channels based on example embodiments below.

According to embodiments, a WTRU (e.g., UE) may be configured explicitly/implicitly in the measurement event configuration with the priority order of the reporting MAC CE. For example, the event configuration for event triggered measurement report may indicate any of: (1) a priority value; (2) a specific location in the ordering; and (3) tied to the event type or specific characteristic of the event.

For example, the MAC CE may be treated similar to a data LCH and may be included with the priority of the LCH indicated by the priority value. In the case the reporting is configured with priority 1 in the event configuration, the WTRU (e.g., UE) may include the reporting MAC CE in the grant based on a prespecified ordering (i.e., before or after BSR MAC CE, etc.).

For example, multiple possible orderings of the reporting MAC CE may be specified. The WTRU (e.g., UE) may be configured (e.g., in the event configuration) with the specific priority order of the measurement report which is triggered by the corresponding event (e.g., based on an ordering type IE or similar).

For example, a WTRU (e.g., UE) may determine the MAC CE ordering based on the specific event type that triggered the measurement report. For example, all events of event type Ax may be configured to report a MAC CE with a specific LCP priority order. For example, the WTRU (e.g., UE) may use a first priority ordering of the MAC CE for measurement events configured based on SSB measurements, and another priority ordering of the MAC CE for measurement events based on CSI-RS measurements.

According to embodiments, a WTRU (e.g., UE) may determine the priority ordering based on the availability of space in the grant. For example, the WTRU (e.g., UE) may be configured with a default priority ordering (e.g., priority 5). If the WTRU (e.g., UE) has a measurement report to transmit and the grant is not large enough to transmit the measurement report MAC CE, the WTRU (e.g., UE) may instead use a second priority ordering (e.g., priority 1) to transmit the measurement report MAC CE. In addition, the WTRU (e.g., UE) may be configured with other conditions described herein for determining whether to maintain the default ordering or whether to change the priority ordering based on available space in the grant (e.g. time-based condition in the subsequent example).

According to embodiments, a WTRU (e.g., UE) may be configured with different priority ordering based on the time since the trigger of the corresponding measurement event. For example, if the time since the event is triggered is below a threshold, the WTRU (e.g., UE) may use a first predefined (or configured) priority order, otherwise, it may use a second predefined (or configured) priority order.

According to embodiments, a WTRU (e.g., UE) may be configured with different priority ordering based on the specific reporting instance associated with the measurement event. Specifically, an LTM measurement event may be configured with a reportAmount to indicate the number of measurement reports to send following the trigger of the event. The WTRU (e.g., UE) may be configured (or specific rules may be defined) to send certain report instances using a first priority order and other report instances using a second priority order. For example, the first reporting instance may be sent with a first (higher) priority order than all remaining reporting instances.

In all of the above embodiments, the WTRU (e.g., UE) behavior may apply to any UL grant. According to embodiments, such or similar behavior may apply (e.g., only) to specific grants, such as a high priority grant (e.g., indicated by DCI as in URLLC), a configured grant, etc. In another example, the WTRU (e.g., UE) may be configured with the grants or grant types in which a first priority ordering should be applied and the grants or grant types in which a second priority ordering should be applied.

According to embodiments, LCP restrictions may be configured, enabled/disabled to be applied to measurement report MAC CEs and/or other data.

For example, an event reporting MAC CE may be allowed to be included in certain grants or grant types (e.g., indicated by DCI, configured in a configured grant configuration, etc.) and not allowed in others. Specifically, a WTRU (e.g., UE) may include an event reporting MAC CE only if the grant allows that MAC CE based on configuration.

According to embodiments, a WTRU (e.g., UE) may be configured with an event or condition for which including an event reporting MAC CE into a specific grant is allowed or not.

For example, such events may be relative to measurements. For example, if the serving cell or beam measurements at the WTRU (e.g., UE) are below a configured threshold at the time when an LTM event is triggered, the WTRU (e.g., UE) may be allowed to include the event reporting MAC CE into a specific grant or grant type (e.g., a specific configured grant configured as such, a URLLC grant indicated by DCI, etc.). Otherwise, the WTRU (e.g., UE) may not be allowed to include such MAC CE into these grants.

For example, such events may be relative to the size of the MAC CE. For example, if the measurement report is smaller than a threshold, the WTRU (e.g., UE) may include the MAC CE is a specific grant or grant type.

For example, such restriction may be activated/deactivated by network signaling (e.g., a DCI, MAC CE, RRC message, etc.).

For example, the WTRU (e.g., UE) may determine whether such restriction is applied based on the measurement configuration. For example, an LTM measurement event may be configured (implicitly/explicitly - as defined further herein) or may have an explicit association (e.g., apply for Ax event) with whether or not the corresponding reporting MAC CE can be included in a grant or grant of a specific type.

According to embodiments, a WTRU (e.g., UE) may be configured with events or event conditions (similar to those in the previous example) as to whether to enable/disable an LCP restriction for other data associated with a specific grant. The advantage of such would be to prioritize the reporting MAC CE over other data in particular grants based on certain events.

According to embodiments a WTRU (e.g., UE) may be configured with multiple (e.g. 2) MAC CE or MAC CE formats for measurement reporting. The MAC CE or MAC CE formats may differ based on at least any of the following: (1) the number (e.g., maximum) of reported cells/beams (and/or beams per cell) included in the report; (2) the bit representation of the measurements (e.g., number of bits used to represent a value, which table in the specification is used to convert a measurement into the reported bit field); and (3) whether a specific field (e.g., event ID, timing information, cell/beam ID, etc.) is included in the report or not.

According to embodiments, the different MAC CE or MAC CE formats may represent different information, such that a WTRU (e.g., UE) may need to report both formats (possibly in different grants) for the network to have the full LTM measurement report.

A WTRU (e.g., UE) may determine which MAC CE to report at a given time based on similar conditions described in previous examples.

According to embodiments, a WTRU (e.g., UE) may determine which MAC CE to report based on the available space in the grant. Specifically, if the WTRU (e.g., UE) is able to include a first MAC CE format (assumed to be larger), it may do so, otherwise, it may include a second MAC CE format (assumed to be smaller).

According to embodiments, a WTRU (e.g., UE) may determine which MAC CE to report based on some property of the measurements to be reported themselves. For example, if the difference in the measurement between the highest value (e.g., best beam) and one or more other values (e.g., next best beam) is larger than a threshold, the WTRU (e.g., UE) may report the measurement using a second MAC CE format (assumed to be smaller), otherwise, it may use a first MAC CE format.

According to embodiments, a WTRU (e.g., UE) may determine which MAC CE format to report based on the specific reporting instance following trigger of the event. For example, a WTRU (e.g., UE), following trigger of a measurement event, may transmit a first MAC CE format and then may transmit a second MAC CE format for all subsequent reports associated with the same event. A WTRU (e.g., UE) may be assigned different priority order for the two MAC CEs.

According to embodiments, a WTRU (e.g., UE) may determine which MAC CE format to report based on an implicit or explicit association with an event or parameter associated with an event. Specifically, all events of a specific type (e.g., Ax) may be tied to reporting using a first MAC CE format.

A WTRU (e.g., UE) may report a measurement or an indication that a measurement is available using at least one configured PUCCH or PUSCH resource with configured priority index when a measurement condition is met. Such resource and/or priority index may be configured, for example, as part of a configuration for the measurement event.

For example, a WTRU (e.g., UE) may report a measurement or an indication using first (second) resource with first (second) priority if a first (second) measurement event is triggered.

For example, a WTRU (e.g., UE) may report an indication that a measurement is available using a configured PUCCH resource allowing transmission of 1 bit (such as a resource for scheduling request) when a certain (first) configured A3 measurement event (neighbor cell offset better than serving cell) is triggered. Such PUCCH resource may be assigned a priority index 1 (i.e. higher priority). The WTRU (e.g., UE) may then report the measurement contents using a second resource PUCCH or PUSCH resource. The second PUCCH or PUSCH resource may be configured for the measurement event. According to embodiments, the WTRU (e.g., UE) may receive a dynamic indication for the second PUCCH or PUSCH resource, possibly with same priority index as the first resource. The WTRU (e.g., UE) may retransmit first PUCCH resource with higher transmission power if it has not received indication for the second resource and a configured time period has elapsed since a previous transmission of the first PUCCH resource. The WTRU (e.g., UE) may encode and multiplex the measurement result on the second resource as CSI on PUCCH or CSI on PUSCH. According to embodiments, in case the second resource is PUSCH, the WTRU (e.g., UE) may transmit the measurement result as MAC CE.

For example, the WTRU (e.g., UE) may report an indication that a measurement is available using a configured PUCCH resource when a certain configured A4 measurement event (neighbor cell becomes better than threshold) is triggered. Such PUCCH resource may be assigned a priority index 0 (i.e. lower priority). The WTRU (e.g., UE) may then report the measurement contents using a second PUCCH or PUSCH resource as in previous example.

If a WTRU (e.g., UE) is configured with more than one PUCCH or PUSCH resource for the measurement condition, the WTRU (e.g., UE) may transmit the measurement report on the resource available earliest in time. According to embodiments, the WTRU (e.g., UE) may transmit first (second) part of the measurement report in first (second) resource. According to embodiments, the WTRU (e.g., UE) may transmit an indication that measurement is available in first resource (e.g. PUCCH) and measurement report in second resource (e.g. PUCCH or PUSCH).

### Example embodiments

The WTRU (e.g., UE) may determine whether to report event triggered L1/L2 measurement reports using a first method or a second method (e.g. type of MAC CE/priority) based on characteristics of the measurements (e.g. measurement value, rate of change, etc.) and/or availability of resources (e.g.: grant size).

The WTRU (e.g., UE) may receive a configuration of a set of LTM target cells.

The WTRU (e.g., UE) may receive a configuration for L1 measurement events reporting which may comprise any of: (1) event trigger conditions associated with L1 measurements E.g. conditional event Ax, etc.; and (2) configuration and associated conditions for determining whether a first or second measurement reporting mechanism is used.

The WTRU (e.g., UE) may perform and evaluate measurements of the downlink beams on one or more configured LTM target cells.

If one or more configured measurement events is triggered, the WTRU (e.g., UE) may determine whether to use a first measurement reporting mechanism or a second measurement reporting mechanism for reporting L1/L2 measurements following the triggered event: e.g. If an uplink grant is available with sufficient space for reporting the full measurement report in a MAC CE and/or e.g. if the difference between the best beam and other beams of the cell which triggered the event is below a threshold; etc.

If the determined condition is satisfied, the WTRU (e.g., UE) may report the measurement events using a first measurement reporting mechanism, otherwise, the WTRU (e.g., UE) may use a second measurement reporting mechanism: e.g., Use a full format MAC CE, otherwise use a shortened format MAC CE; (whereby, for example, a full format MAC CE may report the list of N best beam, while the second format MAC CE may report (e.g., only) the best beam); e.g., Use a first priority (e.g. in LCP) for the measurement report MAC CE, otherwise use a second priority

The WTRU (e.g., UE) may report the event triggered measurements using the determined reporting mechanism.

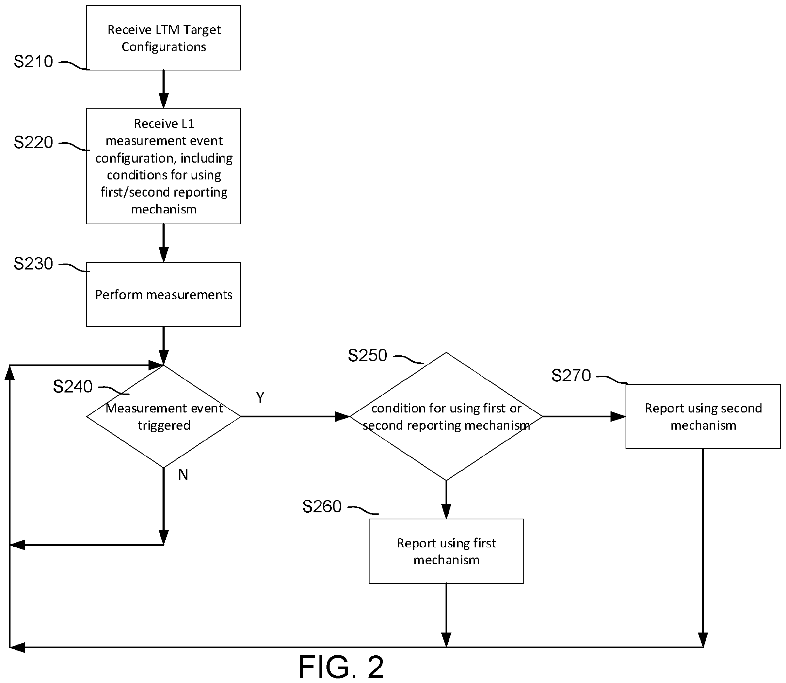

**FIG.** 2 illustrates an example of a LTM procedure.

A WTRU (e.g., UE) may receive configuration of a set of configured LTM target cells (step S210). A WTRU (e.g., UE) may receive (e.g., in an RRC message) a measurement event configuration associated with one or more event triggering conditions in the form of an Ax and/or Bx event (step S220). For example, an event may be configured for the WTRU (e.g., UE) to trigger a measurement report if a neighbor cell or beam becomes better than the serving cell or beam by at least a threshold amount. A WTRU (e.g., UE) may further receive additional configuration associated with determining the measurement reporting mechanism. For example, the WTRU (e.g., UE) may be configured with a threshold difference between the best beam and any other beam associated with the measurement to be reported.

The WTRU (e.g., UE) then performs measurements of the downlink beams on one or more configured LTM target cells (step S230).

If one or more of the configured measurement events is triggered (step S240), the WTRU (e.g., UE) determines, at the time of event triggering, or sometime thereafter, whether to use a first measurement reporting mechanism or a second reporting mechanism to report the measurements (steps S250, S260, S270). For example, a WTRU (e.g., UE) may transmit the measurements in an uplink grant. The WTRU (e.g., UE) may be configured with two different measurement reporting MAC CEs (and specific parameters to report in each). If the size of the grant is sufficient to report a first MAC CE within the grant, the WTRU (e.g., UE) may report the first MAC CE, otherwise, it may report a second MAC CE. According to embodiments, if the difference between the best beam in one/more/all of the measurements and the other beams is larger than a threshold, the WTRU (e.g., UE) may report a first MAC CE, otherwise it may report a second MAC CE. In another example, a WTRU (e.g., UE), when transmitting a measurement report MAC CE in an uplink grant, may determine the priority order of the MAC CE during LCP (e.g. a first priority or order vs a second priority or order) based on similar conditions.

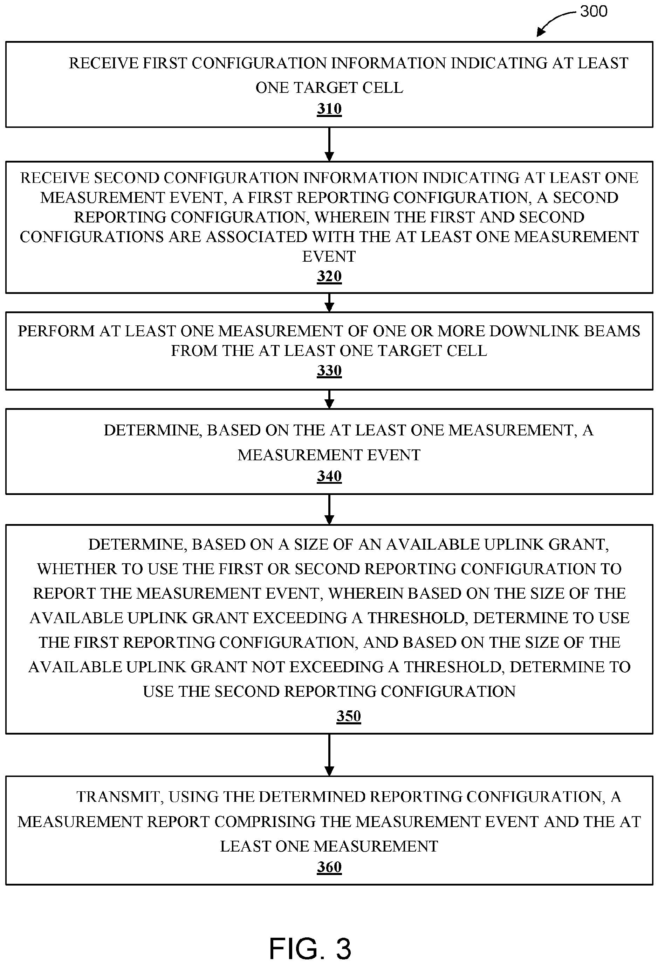

**FIG.** 3 illustrates an example of a report event triggered measurement reports, implemented by a WTRU.

The WTRU may receive first configuration information indicating at least one target cell (step 310).

The WTRU may receive second configuration information indicating at least one measurement event, a first reporting configuration, a second reporting configuration, wherein the first and second configurations are associated with the at least one measurement event (step 320).

The WTRU may perform at least one measurement of one or more downlink beams from the at least one target cell (step 330).

The WTRU may determine, based on the at least one measurement, a measurement event (step 340).

The WTRU may determine, based on a size of an available uplink grant, whether to use the first or second reporting configuration to report the measurement event, wherein, for example, based on the size of the available uplink grant exceeding a threshold, the WTRU may be configured to determine to use the first reporting configuration, and based on the size of the available uplink grant not exceeding a threshold, the WTRU may be configured to determine to use the second reporting configuration (step 350).

The WTRU may transmit, using the determined reporting configuration, a measurement report comprising the measurement event and the at least one measurement (step 360).

According to embodiments, the at least one target cell may comprise at least one layer 1/layer 2 triggered mobility target cell, and wherein the at least one measurement event comprises at least one layer 1/ layer 2 event.

According to embodiments, the first reporting configuration may indicate a full measurement report in a MAC CE.

According to embodiments, the full measurement report may comprise a first number of measurements of the one or more downlink beams.

According to embodiments, the second reporting configuration may indicate a shortened report in a shortened MAC CE.

According to embodiments, the shortened report may comprise a second number of measurements of the one or more downlink beams, and wherein the first number of measurements may be greater than the second number of measurements.

According to embodiments, the first reporting configuration may indicate a first priority associated with the measurement report and the second reporting configuration may indicate a second priority associated with the measurement report.

According to embodiments, the first reporting configuration may indicate a first channel/resource for transmitting the measurement report; and the second reporting configuration may indicate a second channel/resource for transmitting the measurement report.

According to embodiments, the first reporting configuration may indicate a first duration for transmitting the measurement report; and the second configuration may indicate a second duration for transmitting the measurement report.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. § 112, ¶ 6 or means-plus-function claim format, and any claim without the terms "means for" is not so intended.

## Claims

1. A method implemented in a wireless transmit/receive unit (WTRU), the method comprising:
receiving first configuration information indicating at least one target cell;
receiving second configuration information indicating at least one measurement event, a first reporting configuration, a second reporting configuration, wherein the first and second configurations are associated with the at least one measurement event;
performing at least one measurement of one or more downlink beams from the at least one target cell;
determining, based on the at least one measurement, a measurement event;
determining, based on a size of an available uplink grant, whether to use the first or second reporting configuration to report the measurement event, wherein
based on the size of the available uplink grant exceeding a threshold, determine to use the first reporting configuration, and
based on the size of the available uplink grant not exceeding a threshold, determine to use the second reporting configuration; and
transmitting, using the determined reporting configuration, a measurement report comprising the measurement event and the at least one measurement.

2. The method according to claim 1, wherein the at least one target cell comprises at least one layer 1/layer 2 triggered mobility (LTM) target cell, and wherein the at least one measurement event comprises at least one layer 1/ layer 2 event.

3. The method according to any of claims 1-2, wherein the first reporting configuration indicates a full measurement report in a medium access control control element (MAC CE).

4. The method according to claim 3, wherein the full measurement report comprises a first number of measurements of the one or more downlink beams.

5. The method according to any of claims 1-4, wherein the second reporting configuration indicates a shortened report in a shortened MAC CE.

6. The method according to claim 5, wherein the shortened report comprises a second number of measurements of the one or more downlink beams, and wherein the first number of measurements is greater than the second number of measurements.

7. The method according to any of claims 1-3, wherein the first reporting configuration indicates a first priority associated with the measurement report and the second reporting configuration indicates a second priority associated with the measurement report.

8. The method according to any of claims 1-3, wherein the first reporting configuration indicates a first channel/resource for transmitting the measurement report; and the second reporting configuration indicates a second channel/resource for transmitting the measurement report.

9. The method according to any of claims 1-3, wherein the first reporting configuration indicates a first duration for transmitting the measurement report; and the second configuration indicates a second duration for transmitting the measurement report.

10. A wireless transmit/receive unit (WTRU) comprising circuitry, including a transmitter, a receiver, a processor and memory, the WTRU configured to:
receive first configuration information indicating at least one target cell;
receive second configuration information indicating at least one measurement event, a first reporting configuration, a second reporting configuration, wherein the first and second configurations are associated with the at least one measurement event;
perform at least one measurement of one or more downlink beams from the at least one target cell;
determine, based on the at least one measurement, a measurement event;
determine, based on a size of an available uplink grant, whether to use the first or second reporting configuration to report the measurement event, wherein
based on the size of the available uplink grant exceeding a threshold, the WTRU is configured to determine to use the first reporting configuration, and
based on the size of the available uplink grant not exceeding a threshold, the WTRU is configured to determine to use the second reporting configuration; and
transmit, using the determined reporting configuration, a measurement report comprising the measurement event and the at least one measurement.

11. The WTRU according to claim 10, wherein the at least one target cell comprises at least one layer 1/layer 2 triggered mobility (LTM) target cell, and wherein the at least one measurement event comprises at least one layer 1/ layer 2 event.

12. The WTRU according to any of claims 10-11, wherein the first reporting configuration indicates a full measurement report in a medium access control control element (MAC CE).

13. The WTRU according to claim 12, wherein the full measurement report comprises a first number of measurements of the one or more downlink beams.

14. The WTRU according to any of claims 10-13, wherein the second reporting configuration indicates a shortened report in a shortened MAC CE.

15. The WTRU according to claim 14, wherein the shortened report comprises a second number of measurements of the one or more downlink beams, and wherein the first number of measurements is greater than the second number of measurements.

16. The WTRU according to any of claims 10-12, wherein the first reporting configuration indicates a first priority associated with the measurement report and the second reporting configuration indicates a second priority associated with the measurement report.

17. The WTRU according to any of claims 10-12, wherein the first reporting configuration indicates a first channel/resource for transmitting the measurement report; and the second reporting configuration indicates a second channel/resource for transmitting the measurement report.

18. The WTRU according to any of claims 10-12, wherein the first reporting configuration indicates a first duration for transmitting the measurement report; and the second configuration indicates a second duration for transmitting the measurement report.
